# EUROPÄISCHE PATENTSCHRIFT

(11) **EP 2 742 198 B1**
(45) Veröffentlichungstag und Bekanntmachung des Hinweises auf die Patenterteilung: **02.11.2016**
(21) Anmeldenummer: 12741242.7
(22) Anmeldetag: 09.06.2012
(51) Int. Cl.: E05D 1/02

(54) **SCHARNIERELEMENT, HERGESTELLT AUF BASIS MINDESTENS EINES FLÄCHENGEBILDES UND VERFAHREN ZUR HERSTELLUNG EINES SCHARNIERELEMENTS AUF BASIS MINDESTENS EINES FLÄCHENGEBILDES**
HINGE ELEMENT PRODUCED ON THE BASIS OF AT LEAST ONE PLANAR STRUCTURE, AND A METHOD FOR PRODUCING A HINGE ELEMENT ON THE BASIS OF AT LEAST ONE PLANAR STRUCTURE
ÉLÉMENT DE CHARNIÈRE, FABRIQUÉ SUR LA BASE D'AU MOINS UNE STRUCTURE PLANE ET PROCÉDÉ DE FABRICATION D'UN ÉLÉMENT DE CHARNIÈRE SUR LA BASE D'AU MOINS UNE STRUCTURE PLANE

(30) Priorität: 13.08.2011 DE 102011110937
(43) Veröffentlichungstag der Anmeldung: 18.06.2014
(73) Patentinhaber: Universität Kassel, 34125 Kassel (DE)
(72) Erfinder: HEIM, Hans-Peter, 33332 Gütersloh (DE); LIEVEN, Nina, 38442 Wolfsburg (DE); RIES, Angela, 34117 Kassel (DE); SENNHENN, Dominik, 34560 Fritzlar (DE)
(74) Vertreter: Walther, Walther & Hinz GbR
(86) Internationale Anmeldenummer: PCT/DE2012/000612
(87) Internationale Veröffentlichungsnummer: WO 2013/023632

(56) Entgegenhaltungen:
- DE-U1- 8 516 467
- GB-A- 2 335 231
- US-A- 3 516 115
- US-A1- 2002 133 905
- US-A1- 2004 078 929

## Beschreibung

Die Erfindung betrifft einerseits ein Scharnierelement, hergestellt auf Basis mindestens eines Flächengebildes aus einem Material aus einem thermoplastischen Kunststoff, z. B. einer Folie, einem Gewebe, Gelege, Gewirk oder Gestrick, das einem Reckprozess unterworfen wird, und andererseits ein Verfahren zur Herstellung eines Scharnierelements auf der Basis mindestens eines solchen Flächengebildes aus einem thermoplastischen Kunststoff, das mindestens einem Reckprozess unterworfen wird.

Unter einem Scharnierelement wird im Folgenden ein Gelenk oder eine gelenkige Verbindung zwischen zwei Gelenk- oder Scharnierpartnern verstanden. Durch die Scharnierpartner findet die Anbringung an einen Gegenstand, z. B. eine Tür, statt. Ein Scharnier umfasst demzufolge Scharnierpartner und ein Scharnierelement.

Scharniere sind aus dem Stand der Technik grundsätzlich bekannt. Bekannt sind hierbei insbesondere mechanische Scharniere in der Form beispielsweise von Scharnierbändern, wie sie insbesondere auch in der Möbelindustrie Verwendung finden. Darüber hinaus sind sogenannte Filmscharniere bekannt, wobei sich ein solches Filmscharnier dadurch auszeichnet, dass es aus einem dünnen Kunststoffmaterial besteht, wobei das Material des Filmscharnieres größtenteils identisch ist mit dem der Scharnierpartner, die durch das Filmscharnier miteinander verbunden sind, z. B. die Verbindung eines Deckels mit einer Dose durch ein Filmscharnier.

In diesem Zusammenhang ist aus der DE 201 20 819 U1 ein Scharnierelement als Streifen aus einer Folie und/oder einem Flächengebilde wie einem Gewebe, Gewirk und Gelege bekannt.
Das Scharnierelement als Folie oder Flächengebilde verbindet hierbei ein aus einem glasfaserverstärkten thermoplastischen Kunststoff hergestelltes Abdeckteil mit einer ebenfalls aus einem glasfaserverstärkten thermoplastischen Kunststoff hergestellten Klappe für eine Öffnung in dem Abdeckteil. Die das Scharnierelement bildende Folie oder das Flächengebilde ist aus einem zu dem thermoplastischen Kunststoff des Abdeckteils kompatiblen Kunststoff hergestellt.

Der das Scharnierelement bildende Streifen aus diesem Kunststoff ist hierbei sowohl in das Abdeckteil als auch in die Klappe eingepresst. Bekannt ist insofern ein Scharnierelement, das aus einem Gewebe, Gewirk oder Gelege hergestellt ist. Derart hergestellte Scharnierelemente besitzen, wenn überhaupt, nur ein sehr geringes Rückstellverhalten.

Aus der DE-U 8516467.4 ist in diesem Zusammenhang bekannt ein Scharnierelement aus einem Verbund aus mehreren übereinander angeordneten, streckorientierten Folien bereitzustellen, wobei zu beiden Seiten eines definierten Scharnier- oder Gelenkbereichs die Folien zueinander hitzefixiert sind. Die Hitzefixierung erfolgt entweder durch Heißsiegelung oder Ultraschallschweißung.

Unter bestimmten Bedingungen besteht allerdings ein Bedürfnis ein Scharnier vorzusehen, dass das Bestreben hat, sich nach einer Ausstell- oder Schwenkbewegung in seine Ausgangsstellung zurückzubewegen, also über ein ausgeprägtes Rückstellverhalten verfügt. Bei mechanischen Scharnieren werden hierfür solche verwendet, die beispielsweise federbelastet sind.

Die der Erfindung zugrundeliegende Aufgabe besteht demzufolge darin, ein Scharnierelement auf Basis eines Flächengebildes aus einem Material aus thermoplastischen Kunststoff herzustellen, das das gewünschte Rückstellverhalten zeigt.

Ein Scharnierelement der eingangs genannten Art, das ein solches Rückstellverhalten zeigt, zeichnet sich erfindungsgemäß dadurch aus, dass das Material aus thermoplastischem Kunststoff, welches zuvor einem nach dem Reckprozess unter Wärmeeinwirkung einem Schrumpfprozess unterworfen wird.

Das Ausgangsmaterial für die Herstellung eines Flächengebildes können eine Folie, Fäden, Garne, Bändchen oder Filamente und/oder ein aus Fäden, Garnen, Bändchen oder Filamenten hergestelltes Gewebe, Gewirk oder Gelege sein.

Vorteilhafte Merkmale und Ausgestaltungen der Erfindung ergeben sich aus den Unteransprüchen.
Durch Recken wird bei Folien, Garnen, Fäden, Bändchen oder Filamenten durch Ziehen eine Längsorientierung der Molekülketten erreicht. Beim Reckvorgang wird die Länge des Werkstoffes teilweise in mehreren Schritten auf das Mehrfache vergrößert. Hierbei steigt die Zugfestigkeit und Zugsteifigkeit in Reckrichtung oft auch um das Mehrfache an. Diese Eigenverstärkung kann gezielt durch Schmelze- und/oder Festphasendeformation eingebracht werden und basiert im Wesentlichen auf der Erzeugung von gerichteten kristallinen Überstrukturen sowie der Orientierung der Makromolekülketten. Der Vorgang des Reckens kann
hierbei auch unter Wärmeeinwirkung vorgenommen werden. Wenn nach dem Vorgang des Reckens beispielsweise eine Folie erwärmt wird, so hat die Folie das Bestreben zu schrumpfen.

Wird ein anderes Flächengebilde, z. B. ein Gewebe, ein Gewirk oder ein Gelege, das aus Fäden, Garnen, Bändchen oder Filamenten hergestellt ist, die vor der Verarbeitung, z. B. zu einem Gewebe einem Reckvorgang unterworfen worden sind, einer nachfolgenden Wärmeeinwirkung ausgesetzt, dann hat ein solches Flächengebilde ebenfalls das Bestreben zu schrumpfen. Es hat sich nun herausgestellt, dass z. B. eine Folie, die zunächst gereckt wurde, und die danach unter Wärme einem Schrumpfprozess unterzogen worden ist, das Bestreben hat, nach einer Verformung in ihre Ausgangsposition, die sie nach abgeschlossenem Schrumpfvorgang eingenommen hat, zurückzugehen. Das heißt, ein in solcher Weise aus einer Folie hergestelltes Scharnierelement hat als biegesteifes Gebilde nach einer Verformung, z. B. durch Knicken, das Bestreben, sich immer wieder in seine Ausgangsposition zurückzubewegen. Gleiches gilt entsprechend für die oben beschriebenen weiteren Flächengebilde. Das heißt, auch ein in der Ausgangsposition winkliges Flächengebilde wird nach seiner Auslenkung in die Ursprungslage zurückgehen. Insofern fallen auch Flächengebilde unter die Erfindung, die in einer Werkzeugform einliegen, die nicht eben ist, sondern z. B. abgewinkelt.

Dem Vorgang des Reckens kann ein aus z. B. Fäden, Bändchen oder Garnen hergestelltes Flächengebilde z. B. ein Gewebe (Bändchengewebe) auch erst nach seiner Erstellung unterworfen werden. Das heißt, die das Flächengebilde bildenden Fäden, Garne oder Filamente werden als Flächengebilde gereckt. Auch ein solchermaßen bearbeitetes Flächengebilde wird unter Wärmeeinwirkung schrumpfen. Denkbar ist ebenfalls und auch dies ist durch die Erfindung umfasst, die das Flächengebildete bildenden Fäden oder Garne zu recken, um dann nachfolgend das hieraus hergestellte Flächengebilde nochmals einem oder mehreren Reckvorgängen zu unterwerfen. Auch ein solches Flächengebilde wird unter erneuter Wärmeeinwirkung schrumpfen.
Aber auch die Flächengebilde selbst können aus unterschiedlichen Materialien ausgebildet sein. So ist z. B. bei einem Gewebe denkbar, die Kett- und die Schussfäden aus Fäden und Bändchen herzustellen, wobei zudem die Fäden und Bändchen aus unterschiedlichen thermoplastischen Kunststoffen hergestellt sind bzw. sein können.

Die Flächengebilde selbst zur Herstellung eines Scharnierelements können aus z. B. Fäden, Garnen oder Bändchen unterschiedlicher Materialien oder gleicher Materialien aber z. B. unterschiedlicher Querschnitte oder aus einer Kombination von beiden hergestellt sein. Das Scharnierelement kann auch mehrere übereinander und miteinander verbundene Flächengebilde umfassen, wobei die Flächengebilde selbst sowohl in Bezug auf die Art als auch in Bezug auf das Material unterschiedlich zueinander sein können. So ist beispielsweise die Kombination eines Gewebes mit einer Folie denkbar um die Oberfläche des Gewebes glatt zu gestalten oder das Scharnier farblich durch die Folie zu gestalten; dies unabhängig davon, dass die Folie als Flächengebilde ebenfalls die Rückstellfunktion des Scharnierelements unterstützt. Die Verbindung mehrerer Flächengebilde zur Bildung eines Scharnierelements kann z. B. durch Nähen oder Kleben vorgenommen werden.

Gegenstand der Erfindung ist ebenfalls ein Verfahren zur Herstellung eines Scharnierelements auf Basis eines Flächengebildes z. B. einer Folie, eines Gewebes, Geleges oder Gewirkes aus einem thermoplastischen Kunststoff, wobei das Flächengebilde und/oder die das Flächengebilde bildenden Fäden, Garne, Bändchen oder Filamente mindestens einem Reckvorgang unterworfen werden, wobei das Flächengebilde in einer Werkzeugform erwärmt wird, wobei während der Abkühlphase das Flächengebilde in der Werkzeugform einen Schrumpfvorgang ausführt. Auch für das Verfahren wird davon ausgegangen, dass das Flächengebilde als Ganzes gereckt wird, z. B. eine Folie oder ein Gewebe, oder aber es werden die einzelnen Fäden, Garne oder Filamente vor der Verarbeitung zu dem Flächengebilde gereckt und dann dem Schrumpfvorgang unterzogen oder aber das bereits aus gereckten Fäden, Garnen oder Filamenten hergestellte Flächengebilde wird vor dem Schrumpfvorgang noch einem oder mehreren Reckvorgängen unterzogen. Hieraus wird Folgendes deutlich:
Das Flächengebilde wird in eine Werkzeugform mit einem Formunterteil und einem Formoberteil in Form eines Werkzeugstempels eingelegt, wobei in der Werkzeugform das Flächengebilde unter Druck erwärmt wird, vorzugsweise bis zur Schmelztemperatur des thermoplastischen Kunststoffs oder darüber hinaus. Ergänzend können Flächengebilde auch noch zwischen die Scharnierpartner gelegt werden, um ein Scharnier zu bilden. Denkbar ist allerdings auch, das Scharnierelement in ein Scharnier zu überführen, indem das Scharnierelement unmittelbar an z. B. einem Deckel und einem Gehäuse ähnlich eines Filmscharniers angebracht wird. Bei der Schmelztemperatur kann auch die Verbindung des Flächengebildes mit Scharnierpartnern vorgenommen werden, die der Verbindung des Scharniers z. B. mit einem Schrank dienen. Hierbei entsteht eine stoffschlüssige Verbindung mit dem jeweiligen Scharnierpartner. Die Flächengebilde können sich hierbei oberhalb und/oder unterhalb der Scharnierpartner befinden. Zur Stabilisierung des Flächengebildes zwischen den beiden Scharnierpartnern kann der Raum zwischen den Flächengebilden durch ein weiteres Flächengebilde ausgefüllt werden. Eine solche Maßnahme kommt insbesondere bei Scharnierpartnern mit großem Querschnitt zum Tragen.

Während der Abkühlphase wird das Flächengebilde soweit entlastet, dass das Flächengebilde zwar schrumpfen kann, aber sich ansonsten in seiner Beschaffenheit der Oberfläche nicht oder nicht wesentlich verändert. Das heißt, es wird schlussendlich das Flächengebilde durch Auffahren der Werkzeugform soweit minimal entlastet, dass es den gewünschten Schrumpfvorgang ausüben kann, sich allerdings nicht anders verformen kann, also z. B. nicht wellig wird oder sich verzieht.

Anhand der Zeichnungen wird die Erfindung nachstehend beispielhaft näher erläutert.
- Fig. 1: zeigt schematisch den Ablauf zur Herstellung eines Scharnierelements aus einzelnen Fäden, Garnen oder Filamenten;
- Fig. 2: zeigt die Herstellung eines Scharnierelements aus einem Flächengebilde z. B. einer Folie, Gewebe, Gelege oder Gewirk, wobei ein Flächengebilde auch aus bereits gereckten Fäden, Garnen oder Filamenten gemäß Fig. 1 bestehen kann;
- Fig. 3a, 3b: zeigen schematisch eine Werkzeugform mit einliegenden Flächengebilden, zwischen denen Scharnierpartner vorgesehen sind;

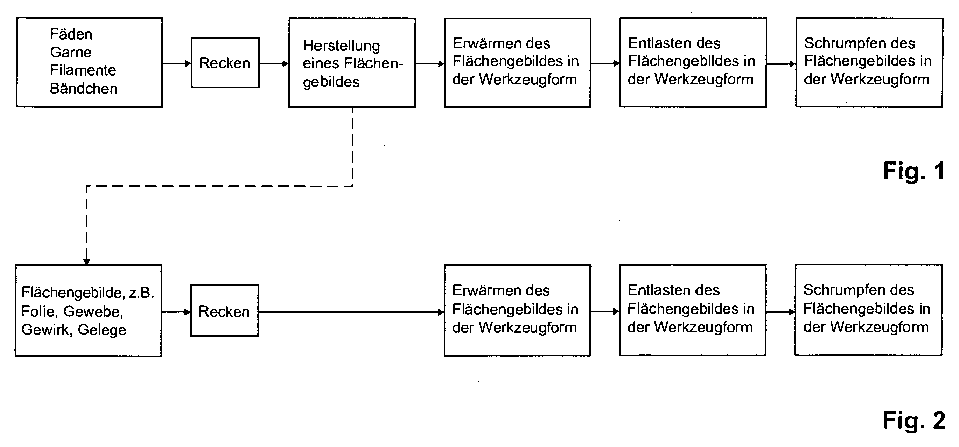

Wie sich aus Fig. 1 ergibt, werden einzelnen Fäden, Garne oder Filamente einem oder mehreren aufeinanderfolgenden Reckvorgängen unterworfen. Ein solches Recken insbesondere unter Wärmeeinwirkung führt zu einer Orientierung der Makromolekülketten des thermoplastischen Kunststoffes, was zu einer Erhöhung der Zugfestigkeit führt. Dieses Prinzip ist aus dem Stand der Technik bekannt. Nach Herstellung eines Flächengebildes aus solchen gereckten Fäden, Garnen oder Filamenten wird das Flächengebilde in einer Werkzeugform unter auf das Flächengebilde einwirkenden Druck bis zur Schmelztemperatur des thermoplastischen Kunststoffs oder darüber hinaus erwärmt, wobei dann während des Abkühlvorganges dem Flächengebilde erlaubt wird, in der Werkzeugform zu schrumpfen, und zwar im Wesentlichen unter Beibehaltung seiner Ausgangsform in der Werkzeugform. Liegt ein Flächengebilde vor, z. B. in Form einer ungereckten Folie oder eines Gewebes, Geleges oder Gewirkes, wobei z. B. bei einem solchen Gewebe die einzelnen Fäden, das noch keinem Reckprozess unterworfen wurden, wird dieses Flächengebilde zunächst einem Reckprozess unterworfen (Fig. 2), wobei ein solcher Reckprozess auch mehrfach hintereinander ausgeführt werden kann, um zu einer entsprechenden Erhöhung der Zugfestigkeit zu gelangen. Dann wird das Flächengebilde in der Werkzeugform bis an die Schmelztemperatur des Kunststoffes oder darüber hinaus erwärmt. Hierbei entsteht gegebenenfalls auch eine stoffschlüssige Verbindung mit dem Scharnierpartner. Der Scharnierpartner kann z. B. eine Schraubplatte sein, um ein solches Scharnier z. B. am Schrank befestigen zu können. Während der Abkühlphase wird dem Flächengebilde erlaubt zu schrumpfen, wie dies bereits oben dargelegt worden ist, wenn das Flächengebilde in der Werkzeugform entlastet wird. Die Entlastung soll hierbei derart sein, dass sich das Flächengebilde zwar zusammenziehen kann, aber z. B. keine Wellen bildet, d. h. sich nicht verziehen kann. Aus Fig. 1 und Fig. 2 ergibt sich auch eine Kombination, bei der z. B. die Bändchen eines Gewebes vor der Verarbeitung zum Gewebe gereckt werden, um dann, vor dem Erwärmen des Gewebes auf Schmelztemperatur, das Gewebe als solches noch einem Reckvorgang zu unterziehen.

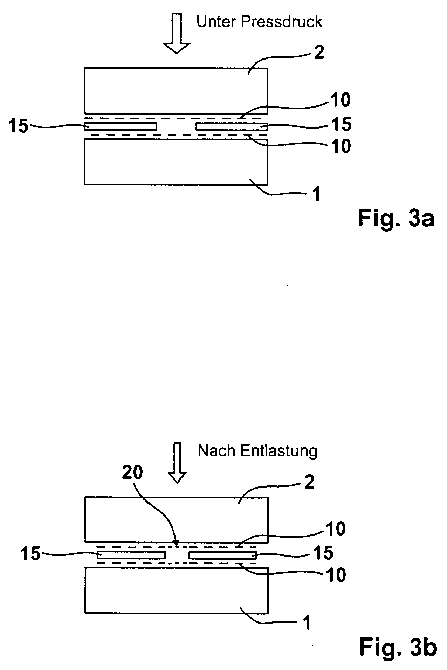

Aus Fig. 3a, Fig. 3b ergibt sich beispielhaft eine solche Werkzeugform, wobei das Formunterteil mit 1 bezeichnet ist, und das Formoberteil als Stempel mit 2. Zwischen Stempel 2 und Formunterteil 1 befinden sich zwei beabstandet zueinander angeordnete gereckte Flächengebilde 10, zwischen denen zwei Scharnierpartner 15 angeordnet sind. Zwischen den Scharnierpartnern kann zum Ausfüllen des Hohlraums zwischen den übereinander angeordneten Flächengebilden ein weiteres Flächengebilde eingelegt werden. Nach der Erwärmung des Flächengebildes aus einem thermoplastischen Kunststoff, beispielsweise einem Polypropylen, einem Polyäthylen oder einem Polyamid bis zur Schmelztemperatur dieses thermoplastischen Kunststoffes in der Werkzeugform unter Druck auf die Oberseite der Flächengebilde wird während der Abkühlphase der Stempel soweit angehoben, dass die Flächengebilde nicht mehr unter der Last des Stempels stehen, sodass sich die Flächengebilde zusammenziehen, also schrumpfen können (Fig. 3b). Dieser Schrumpfvorgang findet hierbei nicht im Bereich der Scharnierpartner statt, sondern dazwischen (Pfeil 20). Es ist hierbei ausreichend, wenn der Stempel um wenige zehntel oder hundertstel Millimeter angehoben wird. Wichtig ist in jedem Fall, dass die Flächengebilde ihre äußere Flächenkontur im Wesentlichen beibehalten, also beispielsweise während des Schrumpfvorganges nicht wellig werden. Hierbei ist völlig gleich, ob die Flächengebilde beispielsweise als Winkel in einer entsprechend ausgebildeten Werkzeugform einliegen oder gerade. Ausschlaggebend ist ausschließlich, dass nach der Erwärmung in der Abkühlphase der Druck soweit reduziert wird, dass ein Schrumpfvorgang erfolgen kann, ohne dass die Oberfläche des jeweiligen Flächengebildes sich bei dem Schrumpfvorgang wesentlich verändert.

Ein solchermaßen hergestelltes Scharnier aus Flächengebilden und Scharnierpartnern zeichnet sich, wie dies bereits im Einzelnen erläutert worden ist, durch eine hohe Rückstellkraft aus, das heißt, ein solches Scharnier hat das Bestreben nach einer Auslenkung im Sinne eines Knickvorgangs immer seine ursprüngliche Form wieder einzunehmen.

Werden die Scharnierpartner nicht während der Wärmebehandlung des oder der Flächengebilde mit dem oder den Flächengebilden verbunden, können die fertigen Flächengebilde (= Scharnierelemente) auch im Nachhinein noch mit den Scharnierpartnern in Verbindung gebracht werden. z. B. rein mechanisch durch Schrauben oder stoffschlüssig durch Verschweißen oder Verkleben. Die Scharnierpartner bilden in Verbindung mit dem Scharnierelement das Scharnier, wobei durch die Scharnierpartner die Anbindung z. B. an einem Schrank erfolgen kann.

Nachstehend sind bei einem Prozess zur Herstellung eines Scharniers die Prozessparameter wiedergegeben, deren Einhaltung erforderlich ist, um einem Gewebe aus Polypropylen (PP) ein Rückstellverhalten anzutrainieren. Die Schmelztemperatur des PP liegt bei ca. 165°C. Die Bändchen des Gewebes sind vor der Verarbeitung zum Gewebe gereckt worden.

In einer 1. Stufe wird das Gewebe in einer Werkzeugförm bei einem Druck von ca. 100 kN auf ca. 177°C aufgeheizt und für in eine Zeit von 30 sec. stabilisiert (Stufe 2). Danach erfolgt eine Abkühlung über 60 sec. bei einem Druck von gleichfalls 100 kN auf ca. 150°C (3. Stufe).

In einer 4. Stufe wird das Gewebe in der Werkzeugform entlastet (0 kN) und über einen Zeitraum von 500 sec. auf 100°C abgekühlt. Danach kann das fertige Scharnier entnommen werden. Die Scharnierpartner können während des Prozesses, während der ersten und zweiten Stufe auf dem Flächengebilde verbunden werden.

### Bezugszeichenliste:

- 1: Formunterteil
- 2: Stempel (Formoberteil)
- 10: Flächengebilde
- 15: Scharnierpartner
- 20: Pfeil

## Patentansprüche

1. Scharnierelement, hergestellt auf Basis mindestens eines Flächengebildes aus einem Material aus thermoplastischem Kunststoff, das einem Reckprozess unterworfen wird,
**dadurch gekennzeichnet,**
**dass** das Material aus thermoplastischem Kunststoff nach dem Reckprozess, unter Wärmeeinwirkung einem Schrumpfprozess unterworfen wird.

2. Scharnierelement nach Anspruch 1,
**dadurch gekennzeichnet,**
**dass** das Material aus thermoplastischem Kunststoff eine Folie, Fäden, Garne, Bändchen oder Filamente sind, oder aus Fäden, Garnen oder Filamenten gebildete Gewebe, Gewirk oder Gelege sind.

3. Scharnierelement nach Anspruch 2,
**dadurch gekennzeichnet,**
**dass** die Fäden, Garne, Bändchen oder Filamente vor Verarbeitung zum Gewebe, Gewirke oder Gelege einen Reckprozess durchlaufen haben.

4. Scharnierelement nach Anspruch 2,
**dadurch gekennzeichnet,**
**dass** das Gewebe, Gewirke oder Gelege einen Reckprozess durchlaufen hat.

5. Scharnierelement nach einem der voranstehenden Ansprüche,
**dadurch gekennzeichnet,**
**dass** der Reckprozess ein oder mehrere Reckvorgänge umfasst.

6. Scharnierelement nach Anspruch 5,
**dadurch gekennzeichnet,**
**dass** der Reckvorgang unter Wärmeeinwirkung erfolgt.

7. Scharnierelement nach einem der voranstehenden Ansprüche,
**dadurch gekennzeichnet,**
**dass** bei mehreren übereinander angeordneten Flächengebilden (10), die Flächengebilde (10) hinsichtlich ihrer Art und/oder dem thermoplastischen Kunststoff jeweils unterschiedlich ausgebildet sind.

8. Scharnierelement nach einem der voranstehenden Ansprüche,
**dadurch gekennzeichnet,**
**dass** das Flächengebilde (10) zur Bildung eines Scharnierelements jeweils aus Fäden, Garnen, Bändchen oder Filamenten unterschiedlicher thermoplastischer Kunststoffe ausgebildet ist.

9. Scharnierelement nach einem der voranstehenden Ansprüche,
**dadurch gekennzeichnet,**
**dass** die Fäden, Garne, Bändchen oder Filamente innerhalb eines Flächengebildes (10) miteinander kombinierbar sind.

10. Verfahren zur Herstellung eines Scharnierelements mit ausgeprägtem Rückstellverhalten auf Basis mindestens eines Flächengebildes (10) aus einer Folie, einem Gewebe, Gelege oder Gewirk aus thermoplastischem Kunststoff,
wobei das mindestens eine Flächengebilde (10) und/oder die das mindestens eine Flächengebilde (10) bildenden Fäden, Garne, Bändchen oder Filamente mindestens einem Reckvorgang unterworfen werden, wobei das Flächengebilde (10) in einer Werkzeugform erwärmt wird, wobei während der Abkühlphase das Flächengebilde (10) in der Werkzeugform einen Schrumpfvorgang ausführt.

11. Verfahren nach Anspruch 10,
**dadurch gekennzeichnet,**
**dass** das mindestens eine Flächengebilde (10) während der Aufheizphase in einer geschlossenen Werkzeugform unter Druck steht, wobei in der Abkühlphase die Werkzeugform soweit geöffnet wird, dass das mindestens eine Flächengebilde (10) zwar schrumpfen kann aber seine Ausgangsform in Bezug auf die Oberfläche im Wesentlichen beibehält.

12. Verfahren nach Anspruch 10 oder 11,
**dadurch gekennzeichnet,**
**dass** das mindestens Flächengebilde (10) bis zur Schmelztemperatur des thermoplastischen Kunststoffs oder darüber hinaus erwärmt wird.

## Claims

1. A hinge element produced on the basis of at least one planar structure made from a material that is made of a thermoplastic synthetic material, that undergoes a stretching process,
**characterized in that**,
following the stretching process, the material made of a thermoplastic synthetic material is subjected to a shrinking process under the effects of heat.

2. The hinge element according to claim 1,
**characterized in that**,
the material made of a thermoplastic synthetic material is a film, threads, yarns, ribbons, or filaments, or woven fabrics, warp-knitted fabrics, or non crimp fabrics made of threads, yarns or filaments.

3. The hinge element according to claim 2,
**characterized in that**,
the threads, yarns, ribbons, or filaments have undergone a stretching process before being transformed into the woven fabric, the warp-knitted fabric, or the non-crimp fabric.

4. The hinge element according to claim 2,
**characterized in that**,
the woven fabric, the warp-knitted fabric, or the non crimp fabric have undergone a stretching process.

5. The hinge element according to one of the preceding claims,
**characterized in that**,
the stretching process includes one or several stretching operations.

6. The hinge element according to claim 5,
**characterized in that**,
the stretching process takes place under the effects of heat.

7. The hinge element according to one of the preceding claims,
**characterized in that**,
when several superimposed planar structures (10) are provided, the planar structures (10) are respectively formed differently with regard to their type and/or to the thermoplastic synthetic material.

8. The hinge element according to one of the preceding claims,
**characterized in that**,
the planar structure (10) for forming a hinge element is formed respectively of threads, yarns, ribbons, or filaments of different thermoplastic synthetic materials.

9. The hinge element according to one of the preceding claims,
**characterized in that**,
the threads, yarns, ribbons, or filaments can be combined with one another within a planar structure (10).

10. A method for producing a hinge element with a pronounced recovery behavior based on at least one planar structure (10) made from a film, a woven fabric, a warp-knitted fabric, or a non crimp fabric made of a thermoplastic synthetic material,
wherein the at least one planar structure (10) and/or the threads, yarns, ribbons, or filaments forming the at least one planar structure (10) are subjected to at least one stretching operation, wherein the planar structure (10) is heated in a tool form, wherein the planar structure (10) performs a shrinking operation in the tool form during the cooling phase.

11. The method according to claim 10,
**characterized in that**,
during the heating phase, the at least one planar structure (10) is under pressure in a closed tool form,
wherein in the cooling phase the tool form is opened enough for the at least one planar structure (10) to shrink while substantially maintaining its original shape with respect to its surface.

12. The method according to claim 10 or 11,
**characterized in that**,
the at least one planar structure (10) is heated up to the melting point of the thermoplastic synthetic material or higher.

## Revendications

1. Elément de charnière, fabriqué sur la base d'au moins une structure plane composée d'un matériau en matière synthétique thermoplastique, qui est soumis à un processus d'étirement,
**caractérisé en ce que**,
le matériau en matière thermoplastique est soumis, après le processus d'étirement, à un processus de rétraction sous l'action de la chaleur.

2. Elément de charnière selon la revendication 1,
**caractérisé en ce que**,
le matériau en matière synthétique thermoplastique est une feuille, des bouts de fils, des fils, des bandelettes ou des filaments, ou des textiles tissés, des tricots en trame ou des textiles non tissés formés à partir de bouts de fils, de fils ou de filaments.

3. Elément de charnière selon la revendication 2,
**caractérisé en ce que**,
les bouts de fils, les fils, les bandelettes ou les filaments sont passés par un processus d'étirement avant d'être transformés en textile tissé, en tricot en trame ou en textile non tissé.

4. Elément de charnière selon la revendication 2,
**caractérisé en ce que**,
le textile tissé, le tricot en trame ou le textile non tissé est passé par un processus d'étirement.

5. Elément de charnière selon l'une des revendications précédentes,
**caractérisé en ce que**,
le processus d'étirement comprend une ou plusieurs opérations d'étirement.

6. Elément de charnière selon la revendication 5,
**caractérisé en ce que**,
l'opération d'étirement s'effectue sous l'action de la chaleur.

7. Elément de charnière selon l'une des revendications précédentes,
**caractérisé en ce que**,
lorsque plusieurs structure planes (10) sont superposées, les structure planes (10) sont respectivement réalisées différemment en ce qui concerne leur type et/ou le matériau en matière thermoplastique.

8. Elément de charnière selon l'une des revendications précédentes,
**caractérisé en ce que**,
la structure plane (10) pour la formation d'un élément de charnière est réalisée respectivement en bouts de fils, en fils, en bandelettes ou en filaments de matières thermoplastiques différentes.

9. Elément de charnière selon l'une des revendications précédentes,
**caractérisé en ce que**,
les bouts de fils, les fils, les bandelettes ou les filaments peuvent être combinés les uns avec les autres au sein d'une structure plane (10).

10. Procédé de fabrication d'un élément de charnière ayant un retour à l'état initial prononcé sur la base d'au moins une structure plane (10) composée d'une feuille, d'un textile tissé, d'un tricot en trame ou un textile non tissé en matière thermoplastique,
où l'au moins une structure plane (10) et/ou les bouts de fils, les fils, les bandelettes ou les filaments formant l'au moins une structure plane (10) sont soumis à au moins une opération d'étirement, où la structure plane (10) est chauffée dans un moule à outil, où la structure plane (10) accomplit une opération de rétraction dans le moule à outil pendant la phase de refroidissement.

11. Procédé selon la revendication 10,
**caractérisé en ce que**,
pendant la phase de chauffage, l'au moins une structure plane (10) est sous pression dans un moule à outil fermé,
où dans la phase de refroidissement le moule à outil est ouvert de telle sorte que l'au moins une structure plane (10) puisse certes rétrécir, mais qu'elle conserve sensiblement sa forme initiale en ce qui concerne sa surface.

12. Procédé selon la revendication 10 ou 11,
**caractérisé en ce que**
l'au moins une structure plane (10) est chauffée jusqu'au point de fusion de la matière thermoplastique ou davantage.
